# EUROPEAN PATENT APPLICATION

(11) **EP 4 811 836 A1**
(43) Date of publication of application: **23.09.2026**
(21) Application number: 25305371.4
(22) Date of filing: 18.03.2025
(51) Int. Cl.: H04W 8/18, H04W 4/021, G06Q 20/32

(54) **SYSTEM WITH CONFIGURABLE PRINTED CIRCUIT BOARD (PCB) WITH DUAL EMBEDDED SUBSCRIBER IDENTITY MODULE (ESIM) ARCHITECTURE**

(71) Applicant: THALES DIS FRANCE SAS, 92190 Meudon (FR)
(72) Inventor: BRUGAL, Hervé, 13008 MARSEILLE (FR)
(74) Representative: Lotaut, Yacine Diaw

(57) **Abstract**

A system (102) with a configurable Printed Circuit Board (PCB) (202) with a dual Embedded Subscriber Identity Module (eSIM) architecture is disclosed. The system (102) includes the PCB (202) including a first Embedded Universal Integrated Circuit Card (eUICC) (204) and a second eUICC (206) coupled with the PCB (202). The first eUICC (204) is configured to operate in a first geographical location (106). The second eUICC (206) is configured to operate in a plurality of geographical locations (108). Further, the system (102) includes a processor coupled with the PCB (202). The processor is configured to manage operation of the first eUICC (204) and the second eUICC (206).

## Description

### FIELD OF USE

The present disclosure relates to a field of electronic devices, and more specifically to a system with configurable printed circuit board (PCB) with dual embedded subscriber identity module (eSIM) architecture.

### BACKGROUND

The Embedded Subscriber Identity Module (eSIM) technology is governed by Global System for Mobile Communications Association (GSMA), has become a critical standard for enabling mobile connectivity without the need for a physical SIM card. eSIM technology is based on a complex set of specifications managed by the GSMA, which include protocols and security frameworks necessary for its secure and flexible operation. While these GSMA standards aim to establish a global framework, several countries have introduced additional regulations for eSIM usage within smartphones, each tailored to meet specific regional concerns. The trend of region-specific regulatory requirements poses significant challenges for eSIM manufacturers, who now navigate and adhere to varying, sometimes conflicting, standards. For instance, Europe's 5G regulatory requirements differ in critical ways from those in China, particularly concerning governance and certification.

The differences in regulatory requirements create a complex technical challenge for eSIM manufacturers to offer a product that meet diverse regulatory demands. The conflicting requirements between the 5G EU regulations and China's Telecommunications Access Framework (TAF) exemplify this challenge, as each imposes distinct governance and certification standards.

Therefore, there is a need for a method and system that addresses the above mentioned technical problems by handling system call of the operating system.

### SUMMARY

The following embodiments presents a simplified summary in order to provide a basic understanding of some aspects of the disclosure. This summary is not an extensive overview, and it is not intended to identify key/critical elements or to delineate the scope thereof. Its sole purpose is to present some concepts in a simplified form as a prelude to the more detailed description that is presented later.

Some example embodiments disclosed herein provide a system with a configurable Printed Circuit Board (PCB) with a dual Embedded Subscriber Identity Module (eSIM) architecture, the system may include the PCB. Further, the PCB may include a first Embedded Universal Integrated Circuit Card (eUICC) configured to operate in a first geographical location. The PCB may include a second eUICC configured to operate in a plurality of geographical locations. Further, the system may include a processor coupled with the PCB. The processor is configured to manage operation of the first eUICC and the second eUICC.

According to some example embodiments, the system includes a control module configured to operate the second eUICC based on the plurality of geographical locations.

According to some example embodiments, the first eUICC is configured to support a first Embedded Subscriber Identity Module (eSIM) in the first geographical location.

According to some example embodiments, the second eUICC is configured to support a second Embedded Subscriber Identity Module (eSIM) and an Embedded Secure Element (eSE) configured to enable roaming in the plurality of geographical locations.

According to some example embodiments, wherein the second eUICC is configured to support Near Field Communication Controller (NFCC) operations.

According to some example embodiments, the second eUICC is configured to support the eSE to enable wallet services in the plurality of geographical locations.

According to some example embodiments, at least one regulation of the first geographical location is incompatible with regulations of the plurality of geographic locations.

According to some example embodiments, the first eUICC is physically segregated from the second eUICC.

Some example embodiments disclosed herein provide a method for configuring a Printed Circuit Board (PCB) with dual Embedded Subscriber Identity Module (eSIM) architecture in a system, the method includes configuring a first Embedded Universal Circuit Card (eUICC) to operate in a first geographical location. Further, the method includes configuring a second eUICC to operate in a plurality of geographical locations. The method may include operating a processor to manage operations of the first eUICC and the second eUICC.

According to some example embodiments, the second eUICC is operated by a control module based on the plurality of geographical locations.

According to some example embodiments, the method may include coupling the first eUICC on the PCB. The first eUICC is configured to support a first Embedded Subscriber Identity Module (eSIM) in the first geographical location.

According to some example embodiments, the method includes coupling the second eUICC on the PCB. The second eUICC is configured to support a second Embedded Subscriber Identity Module (eSIM) and an Embedded Secure Element (eSE) configured to enable roaming in the plurality of geographical locations.

According to some example embodiments, the second eUICC is configured to support NFCC operations.

According to some example embodiments, the second eUICC is configured to support the eSE to enable wallet services in the plurality of geographical locations.

According to some example embodiments, at least one regulation of the first geographical location is incompatible with regulations of the plurality of geographic locations.

### DEFINITIONS

The term "Printed Circuit Board (PCB)" as used herein in the specification may refer to a flat board made from non-conductive material, such as fiberglass or plastic, that physically supports and electrically connects electronic components. PCBs are made up of thin layers of conductive paths that are etched or printed onto the surface of the board to create connections between components like resistors, capacitors, microchips, and connectors.

The term "Embedded Universal Integrated Circuit Card (eUICC)" as used herein in the specification may refer to a type of SIM card that is embedded directly into a device's hardware rather than being a removable card, like traditional SIMs. The eUICC serves as the technical foundation for eSIM technology. The eUICC is a reprogrammable SIM that enables remote SIM provisioning, allowing users to switch between mobile network operators (MNOs) or update carrier profiles without physically changing the SIM card.

The term "Dual Embedded Subscriber Identity Module (eSIM)" as used herein in the specification may refer to a device architecture that incorporates two eSIM, allowing a single device such as a smartphone or similar connected device to support multiple network operator profiles simultaneously or switch between them. The setup provides added flexibility for users and manufacturers in managing mobile connectivity across different regions and networks.

The term "geographical location" as used herein in the specification may refer to a specific physical region or country where a device is being used or marketed. For eSIM, geographical location is critical because regulatory standards and requirements for eSIM functionality, security, and certification vary significantly across regions.

The term "processor" as used herein in the specification may refer to a component that performs the fundamental operations and instructions that allow a computer or electronic device to function. A processor interprets and executes instructions from software, performing tasks such as calculations, data processing, and controlling other components.

The term "Embedded Secure Element (eSE)" as used herein in the specification may be a tamper-resistant, dedicated chip embedded within a device, such as a smartphone, tablet, or wearable, that provides a secure environment for storing and managing sensitive data. The eSE operates independently from the device's main processor and offers a secure space for executing sensitive applications, making it ideal for storing encryption keys, personal identification information, and payment data.

The term "Near Field Communication Controller (NFCC)" as used herein in the specification may support Near Field Communication (NFC), a technology that enables secure, short-range communication between devices, often used for contactless payments, data exchange, and other close-proximity wireless interactions.

The term "wallet services" as used herein in the specification may refer to secure, digital storage and management systems for financial and personal data on a smartphone or other connected devices.

### BRIEF DESCRIPTION OF DRAWINGS

The above and still further example embodiments of the present disclosure will become apparent upon consideration of the following detailed description of embodiments thereof, especially when taken in conjunction with the accompanying drawings.
FIG. 1 illustrates a block diagram of a telecommunication environment of a system with a configurable Printed Circuit Board (PCB) with a dual Embedded Subscriber Identity Module (eSIM) architecture in a telecommunication environment, in accordance with an example embodiment;
FIG. 2 illustrates a block diagram of the system with the configurable PCB with the dual eSIM architecture, in accordance with an example embodiment;
FIG. 3 illustrates a block diagram of the system with the configurable PCB with the dual eSIM architecture, in accordance with an example embodiment;
FIG. 4a - 4c illustrate block diagrams of the system in a plurality of configurations, in accordance with an example embodiment; and
FIG. 5 illustrate an exemplary flow chart of a method of configuring the PCB with the dual eSIM architecture in the system, in accordance with an example embodiment.

The figures illustrate embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, systems, apparatuses, and methods are shown in block diagram form only in order to avoid obscuring the present disclosure.

Reference in this specification to "one embodiment" or "an embodiment" or "example embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

The terms "comprise", "comprising", "includes", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

The evolution of mobile connectivity has transformed smartphones into tools for global communication and commerce. An Embedded Subscriber Identity Module (eSIM) technology, managed under the Global System for Mobile Communications Association (GSMA) standards, has emerged as a critical innovation, reducing the need for physical SIM cards and enabling remote provisioning of mobile network profiles. The eSIM technology offers users the flexibility to switch network operators seamlessly and provides manufacturers with a compact, integrated solution that optimizes device design. However, as the eSIM technology gains worldwide adoption, diverse regulatory requirements have emerged across regions, each imposing unique governance, compliance, and certification standards. The divergent requirements present substantial challenges for manufacturers to deploy the eSIM solution that is compatible across multiple jurisdictions.

Despite the GSMA's global standards, several countries have enacted additional regulations to address their unique security, governance, and compliance requirements. For instance, the European Union and China have implemented distinct eSIM specifications, such as Europe's 5G EU standards and China's Telecommunications Access Framework (TAF) impose different governance rules, particularly around public key management and secure profile provisioning, making it challenging to achieve universal compliance within a single eSIM solution.

As described earlier, conventional system of eSIM technology often fall short of providing seamless, cross-region functionality without risking conflicts of interest or compromising on security and compliance. Thus, manufacturers are forced to produce region-specific eSIM products, which increases production complexity, costs, and logistical burden. There is a clear need for a technical solution that allows a single eSIM architecture to meet varying regional requirements without compromising the functionality, security, or interoperability of the device.

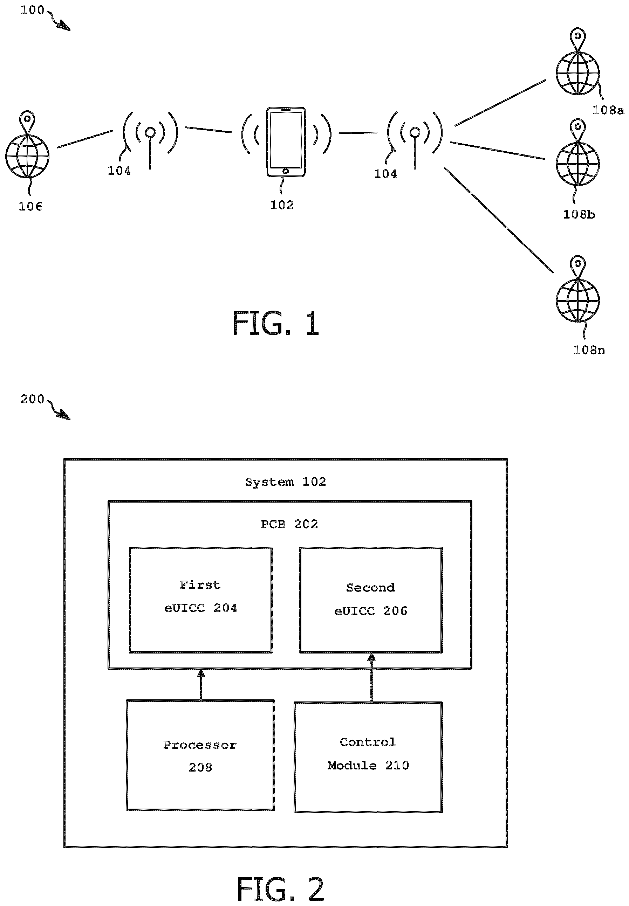

Embodiments of the present disclosure may provide a method, a system with configurable PCB with dual eSIM architecture. The system provides dual eSIM capability to enable regulatory compliance of more than one geographical location in such an improved manner are described with reference to FIG. 1 to FIG. 5 as detailed below.

FIG. 1 illustrates a block diagram of a telecommunication environment 100 of a system 102 with a configurable Printed Circuit Board (PCB) with a dual Embedded Subscriber Identity Module (eSIM) architecture in a telecommunication environment, in accordance with an example embodiment. The system 102 is designed to facilitate compliance with varying regulatory requirements of different geographical locations by implementing a dual eSIM architecture in single device. The telecommunication environment 100 may include the system 102, a communication network 104, a first geographical location 106 and a plurality of geographical location 108a, 108b..., 108n (cumulatively referred as 108). Examples of the system 102 may include, but are not limited to, a server, a desktop, a laptop, a notebook, a tablet, a smartphone, a mobile phone, an application server, or the like.

The system 102 may include a memory, and a processor. The term "memory" used herein may refer to any computer-readable storage medium, for example, volatile memory, random access memory (RAM), non-volatile memory, read only memory (ROM), or flash memory. The memory may include a Random-Access Memory (RAM), a Read-Only Memory (ROM), a Complementary Metal Oxide Semiconductor Memory (CMOS), a magnetic surface memory, a Hard Disk Drive (HDD), a floppy disk, a magnetic tape, a disc (CD-ROM, DVD-ROM, etc.), a USB Flash Drive (UFD), or the like, or any combination thereof.

The term "processor" used herein may refer to a hardware processor including a Central Processing Unit (CPU), an Application-Specific Integrated Circuit (ASIC), an Application-Specific Instruction-Set Processor (ASIP), a Graphics Processing Unit (GPU), a Physics Processing Unit (PPU), a Digital Signal Processor (DSP), a Field Programmable Gate Array (FPGA), a Programmable Logic Device (PLD), a Controller, a Microcontroller unit, a Processor, a Microprocessor, an ARM, or the like, or any combination thereof.

The processor may retrieve computer program code instructions that may be stored in the memory for execution of the computer program code instructions. The processor may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 104 may include one or more processing cores configured to perform independently. A multi-core processor may enable multiprocessing within a single physical package. Additionally, or alternatively, the processor 104 may include one or more processors configured in tandem via the bus to enable independent execution of instructions, pipelining, and/or multithreading.

The communication network 104 may be wired, wireless, or any combination of wired and wireless communication networks, such as cellular, Wi-Fi, internet, local area networks, or the like. In one embodiment, the communication network 104 may include one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fibre-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

Further, the system 102 may be configured to operate in the first geographical location 106 and the plurality of geographical locations 108. In some embodiments, the first geographical location 106 and the plurality of geographical locations 108 may be a geographical region with specified boundaries such as a country, state, group of countries, and a continent. Further, the first geographical location 106 and the plurality of geographical locations 108 may be governed by a government capable of implementing varying regulatory compliance for the system 102. In an aspect, the varying regulatory compliance may result in manufacturing geographical location specific system 102 for different geographical location. In an exemplary embodiment, the first geographical location 106 may be China, and the plurality of geographical location 108 may be United states of America, Europe, etc with comparably same regulatory compliance. However, the regulatory compliance of the plurality of geographical location 108 is different or varies from that of the first geographical location 106.

In an embodiment, the system 102 includes a Printed Circuit Board (PCB). The PCB is a flat board made of non-conductive material, such as fiberglass, that supports and connects electronic components using conductive pathways etched from copper sheets. The PCB provides physical structure and electrical connections to components such as chips, resistors, and capacitors. In an aspect, the PCB enables integration of essential components, such as processors, memory, sensors, and communication modules such as eSIM, in a compact, organized layout that minimizes space while maintaining functionality and performance. Further, the PCB includes a first Embedded Universal Integrated Circuit Card (eUICC) configured to operate in a first geographical location 106. The first eUICC is coupled to the PCB via the conductive pathways. The eUICC is programmable Subscriber Identity Module (SIM) card embedded directly into the PCB of the system 102, such as a smartphone, tablet, or IoT device, and supports eSIM functionality. Further, the PCB may include a second eUICC is configured to operate in a plurality of geographical locations 108. Further, the system 102 include a processor coupled with the PCB. The processor is configured to manage operation of the first eUICC and the second eUICC. The system 102 is further explained in detail in conjunction with FIG. 2 to FIG. 5.

FIG. 2 illustrates a block diagram 200 of the system 102 with the configurable PCB 202 with the dual eSIM architecture, in accordance with an example embodiment. The block diagram 200 may be analogous to the system 102 of the telecommunication environment 100. FIG. 2 is explained in conjunction with FIG. 1.

The system 102 may be an electronic device such as smartphone, tablet, computer, Internet of Things (IoT) device, etc. For the sake of simplicity, the system 102 is explained with reference to the smartphone. The system 102 may be configured to communicate with the telecommunication network to send or receive information from various devices connected to the telecommunication network. The system 102 includes a Printed Circuit Board (PCB) 202 configured to mount a plurality of electronic components to provide connectivity to the telecommunication network. The PCB 202 is a board made from a non-conductive material that supports and connects plurality of electronic components in a variety of devices, from simple gadgets to complex systems like computers, smartphones, and industrial machines. The PCB 202 may include conductive pathways, or traces, made of conductive material such as copper, allowing electricity to flow between components according to a specified design.

The plurality of electronic components may include a first Embedded Universal Integrated Circuit Card (eUICC) 204 and a second eUICC 206 mounted on the PCB 202. The first eUICC 204 and the second eUICC 206 may be connected to the conductive pathways on the PCB 202 to provide power. In an embodiment, the first eUICC 204 is configured to operate in a first geographical location 106. The first geographical location 106 may be a country with strict regulatory compliance in caparison to other countries such as China. In simpler words, the first eUICC 204 is set up to comply with the regulations, network protocols, and requirements unique to China. Further, the second eUICC 206 is configured to operate in the plurality of geographical locations 108. The plurality of geographical location 108 may be a country such as United states or countries of European Union with less strict regulatory compliance in comparison to the first geographical location 106 such as China. In simpler words, the second eUICC 206 is set up to comply with the regulations, network protocols, and requirements unique to United states, European Union, India, and other countries. For example, the first eUICC 204 is configured for a geographical location like China with specific governance and certification standards, while the second eUICC 206 may be set up to meet broader or different standards required in other geographical locations, allowing seamless operation across multiple regions without hardware changes.

In an embodiment, the system 102 may include a processor 208 coupled with the PCB 202. The processor 208 is configured to manage operation of the first eUICC 204 and the second eUICC 206. The processor 208 manages functionalities of the first eUICC 204 and the second eUICC 206 based on location specific regulatory requirements. The processor 208 may automatically enable or disable an eUICC based on location or user preference, allowing access to local networks.

Further, the system 102 may include a control module 210 coupled with the second eUICC 206. The control module 210 is configured to operate the second eUICC 206 based on the plurality of geographical locations 108. In an exemplary embodiment, if the system 102 moves between countries with conflicting regulatory compliance, the control module 210 may enable the second eUICC 206 to operate in compliance with each country's standards while preserving local network connectivity and maintaining regulatory compliance.

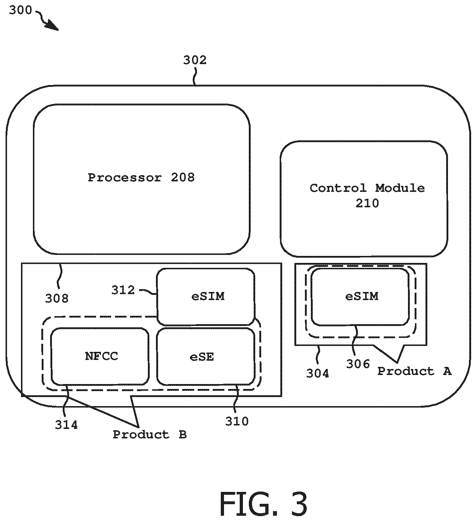

FIG. 3 illustrates a block diagram of a system 300 with a configurable Printed Circuit Board (PCB) 302 with the dual eSIM architecture, in accordance with an example embodiment. The PCB 302 may be analogous to the PCB 202 of the system 102. FIG. 3 is explained in conjunction with FIGs. 1, 2 and 3.

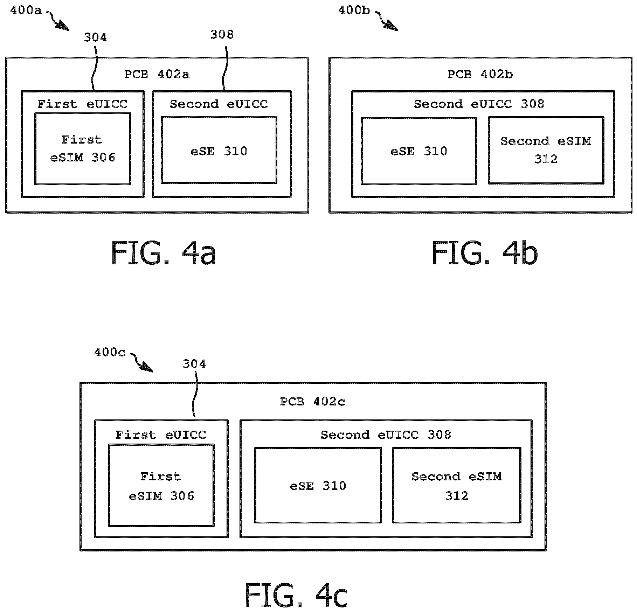

The PCB 302 may include a first eUICC 304 configured to operate in a first geographical location 106 such as China. The first eUICC 304 is dynamically configurable, allowing manufactures to install the first eUICC 304 in case the system 300 is destined for a first geographical location 106 as explained in detail in FIG. 4a, 4b, and 4c. Further, the first eUICC 304 may include a first Embedded Subscriber Identity Module (eSIM) 306. The first eSIM 306 may be a programmable SIM technology embedded directly into the system 300 hardware such as a PCB 302. The first eSIM 306 enables remote management of mobile network subscriptions and allows the system 300 to operate in strict regulations of the first geographical location 106.

In an embodiment, the PCB 302 may include a second eUICC 308 configured to operate in a plurality of geographical locations 108 such as United states, European Union, Africa, India, Russia, Australia, etc. The second eUICC 306 may be attached to the PCB 302 in the plurality of geographical location 108, regardless of the system 300 destination. Further, the second eUICC 308 may include an Embedded Secure Element (eSE) 310, a second eSIM 312, and a Near Field Communication Controller (NFCC) 314. The eSE 310 may be a secure microcontroller embedded within the system 300, to store and protect sensitive data, including payment credentials, authentication keys, and other security-critical information. The eSE 310 allows the system 300 to comply with regulatory compliance of the plurality of geographical location 108. For example, in China, the eSE 310 is required to meet local standards for secure mobile payments. By configuring including the eSE 310 in the PCB 302, the system 300 may support Chinese wallet services and comply with regional security regulations. When the eSE 310 is thus configured, a SPI physical interface may be implemented with an Ultra-Wideband (UWB) chipset to enable UWB based use cases. The UWB is a radio technology that may use a very low energy level for short-range, high-bandwidth communications over a large portion of the radio spectrum. The UWB has traditional applications in non-cooperative radar imaging. The eSE 310 may interfaced with an Application Processor (AP) such as Serial Peripheral Interface (SPI) or an Improved Inter-Integrated Circuit (I3C). The AP may be a main host processor on the device. Further, the AP is running user interface (Wallet) and is interfaced to eSE 310 via a SPI or I3C physical interface. The second eSIM 312 may be a programmable SIM technology embedded directly into the system 300 hardware such as a PCB 302. The second eSIM 312 enables remote management of mobile network subscriptions and allows the system 300 to operate in regulations of the plurality of geographical location 108. Further, the NFCC 314 manages short-range wireless communication between devices. The NFCC 314 may be used for applications such as contactless payments, data exchange, and access control. The NFCC 314 may enable secure wallet services and mobile payment functionality by ensuring that sensitive payment data is stored and managed securely within the system 300. In an embodiment, the NFCC 314 may be interfaced as a Single Wire Protocol (SWP). Further, the eSE 310 and the NFCC 314 may be integrated on a single Integrated Circuit (IC). The NFCC 314 may be the NFC Controller enabling proximity contactless services. The NFCC 314 may be interfaced to the eSE 310 by SWP physical interface.

Further, the system 300 may include a processor 208 and a control module 210. The processor 208 is coupled with the PCB 202 via conductive wires. The processor 208 is configured to manage operation of the first eUICC 304 and the second eUICC 308 as explained in detail in FIGs. 4a, 4b, and 4c. Further, the processor 208 manages functionalities of the first eUICC 304 and the second eUICC 308 based on location specific regulatory requirements. The control module 210 is coupled with the second eUICC 308 via conductive wires. In an embodiment, the control module 210 may configure the eSE 310 in a plurality of configurations based on the plurality of location. The control module 210 may configure the eSE 310 to operate as wallet services of the first geographical location 106 such as China. Further, the control module 210 may configure the eSE 310 to operate as wallet services and eSIM in the plurality of geographical locations 108 except China. The control module 210 may configure the eSE 310 to operate as wallet service in the plurality of geographical locations 108 and eSIM in the plurality of geographical locations 108 except China.

FIG. 4a - 4c illustrates a block diagram of the system 400a, 400b, and 400c (commutatively referred as 400) in a plurality of configurations 400a, 400b, and 400c, in accordance with an example embodiment. The processor 208 and the control module 210 of the system 102 may configure the first eUICC 304 and the second eUICC 308 in a plurality of configuration based on the plurality of geographical locations 108.

FIG. 4a depicts a configuration of the system 400a for a first geographical location 106. The system 400a may include a PCB 402a. The PCB 402a may be a board made from a non-conductive material such as fibre glass, plastic, carbon, etc. to support and connect plurality of electronic components. Further, the PCB 402a may include a first eUICC 304 and the second eUICC 308. The processor 208 may operate the first eUICC 304 to comply with the regulations of the first geographical location 106 such as China. Further, the first eUICC 304 includes a first eSIM 306 enabling remote management of mobile network subscriptions and operating in strict regulations of the first geographical location 106. The first eUICC 304 may be an International Organization for Standardization (ISO) interface with a modem. The modem may enable cellular connectivity and may be interfaced with ISO physical interface. Further, the second eUICC 308 may include the eSE 310. The control module 310 may configure the eSE 210 to operate as wallet services of the first geographical location 106 such as China, as the first eUICC 304 is dedicated to operating as first eSIM 306 in the first location 106. In an embodiment, the second eUICC 308 may be the eSE 310 and the NFCC 314 and may or may not include the eSIM 312.

FIG. 4b depicts a configuration of the system 400b for the plurality of geographical location 108 except China. The system 400b may include a PCB 402b. The PCB 402b may be a board made from a non-conductive material such as fibre glass, plastic, carbon, etc. to support and connect plurality of electronic components. Further, the PCB 402b may include the second eUICC 308. The processor 208 may operate the second eUICC 308 to comply with the regulations of the plurality of geographical location 106 such as Unites States, European Union, India and other countries that follow the GSMA protocols. The second eUICC 308 may include the second eSIM 312 and the eSE 310. The second eSIM 312 enables remote management of mobile network subscriptions and operate in the GSMA regulatory compliance of the plurality of geographical locations 108. The control module 310 may configure the eSE 210 to operate as wallet services in the plurality of geographical locations 108 such as Unites States, European Union, India and other countries that follow the GSMA protocols. It should be noted that the first eUICC 304 may not be embedded in the PCB 402b, if the system 102 is not destined for China.

FIG. 4c depicts a configuration of the system 400a for the plurality of geographical location 108. The system 400c may include a PCB 402c. The PCB 402c may be a board made from a non-conductive material such as fibre glass, plastic, carbon, etc. to support and connect plurality of electronic components. Further, the PCB 402c may include the first eUICC 304 and the second eUICC 308. The processor 208 may operate the first eUICC 304 to comply with the regulations of the first geographical location 106 such as China. Further, the first eUICC 304 includes a first eSIM 306 enabling remote management of mobile network subscriptions and operating in strict regulations of the first geographical location 106. The processor 208 may operate the second eUICC 308 to comply with the regulations of the plurality of geographical location 106 such as Unites States, European Union, India, China, etc. The second eUICC 308 may include the second the eSE 310 and eSIM 312. The second eSIM 312 enables remote management of mobile network subscriptions and operate in the GSMA regulatory compliance of the plurality of geographical locations 108. The control module 310 may configure the eSE 210 to operate as wallet services and roaming services in the plurality of geographical locations 108 such as Unites States, European Union, India, China, etc. It should be noted that the first eUICC 304 and the second eUICC 308 need to be embedded in the PCB 402c, if the system 102 is destined for plurality of locations including GSMA protocols following countries and strict regulations following countries.

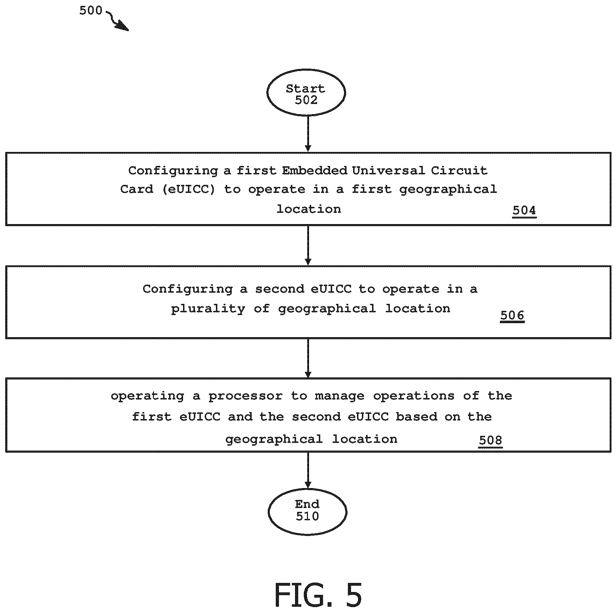

FIG. 5 illustrates an exemplary flow chart of a method 500 of configuring the PCB 202 with the dual eSIM architecture in the system 102, in accordance with an example embodiment. It will be understood that each block of the flow diagram of the method 500 may be implemented by various means, such as hardware, firmware, processor, circuitry, and/or other communication devices associated with execution of software including one or more computer program instructions. For example, one or more of the procedures described above may be embodied by lathe machine, mechanical press, semiconductor machinery, and computer program instructions. In this regard, the computer program instructions which embody the procedures described above may be stored by a memory of the computing device 102, employing an embodiment of the present disclosure and executed by a processor 208. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions.

FIG. 5 is explained in conjunction with elements from Figs 1, 2, 3, and 4. At step 502, the method 500 is initiated. The method 500, at step 504 may include configuring the first eUICC 204 to operate in a first geographical location 106. In simpler words, the first eUICC 204 is compliant with the regulatory requirements of the first geographical location 106 such as China. The method 500 may include coupling the first eUICC 204 on the PCB 202. The first eUICC 204 is configured to support a first Embedded Subscriber Identity Module (eSIM) 302 in the first geographical location 106.

The method, at step 506 may include configuring a second eUICC 206 to operate in a plurality of geographical location 108. In simpler words, the second eUICC 206 is compliant with the regulatory requirements of the plurality of geographical location 106 such as countries of European Union and United States. An Original Equipment Manufacturer (OEM) may manufacture the first eUICC 204 that is compliant with the strict regulations of China and the second eUICC 206 that is compliant with the regulations of the European Union and the United States. Further, the method includes coupling the second eUICC 206 on the PCB 202. The second eUICC 206 is configured to support a second eSIM 304 and an Embedded Secure Element (eSE) 310 configured to enable roaming and wallet services in the plurality of geographical locations 108.

The method, at step 508, may include operating a processor 208 to manage operations of the first eUICC 204 and the second eUICC 206. The processor 208 may be a central processing unit (CPU) that enable and disable the first eUICC 204 and the second eUICC 206 based on the first geographical location 106 and the plurality of geographical locations 108. In an aspect, the method may also include operating the second eUICC 206 in a plurality of configurations as explained in FIGs. 4a - 4c based on the plurality of geographical locations 108. The processor 208 operates the first eUICC 204 and the second eUICC 206 based on the regulatory compliances of the geographical location. It should be noted that at least one regulation of the first geographical location 106 is incompatible with regulations of the plurality of geographic locations 108.

As will be appreciated by those skilled in the art, the techniques described in the various embodiments discussed above are not routine, or conventional, or well understood in the art. The techniques discussed above provide for innovative solutions to address the challenges associated with generating holistic responses based on structural and semantic queries. The disclosed techniques offer several advantages over the existing methods as listed in below paragraphs.

The present disclosure introduces a method and a system that enables manufacturers to use the Printed Circuit Board (PCB) across different markets, simplifying the design and production process by adjusting only the Stock Keeping Unit (SKU) according to regional requirements.

By physically segregating eSIM components, the system complies with varying international eSIM regulations, such as China's and the EU's. The separation reduces the risks associated with geopolitical tensions or regulatory conflicts.

The present disclosure introduces modular design reducing waste and energy consumption by using smaller silicon footprints, which aligns with environmental goals.

The present disclosure provides a method and a system that uses single PCB which can be used globally, thereby manufacturers can streamline sourcing and potentially lower production costs due to fewer component variations. A single supplier can support multiple configurations, making it more efficient and cost-effective.

The present disclosure allows users to roam between regions, including between China and international markets, without losing their home country subscription, overcoming limitations found in existing solutions where roaming may erase user data or restrict usage.

The disclosed techniques offer several applications as listed in below paragraphs.

The dual eSIM system may be applicable for smartphones sold in both domestic (e.g., China-only) and international markets. Manufacturers may enable compliance with Chinese regulatory requirements while also supporting international standards within a single device, reducing the need for region-specific models.

The system may be used in corporate or government-issued smartphones that require strict security protocols and reliable cross-border connectivity, the dual eSIM architecture provides secure, flexible, and compliant connectivity options without compromising on regulatory requirements.

With the growth of 5G networks and the diversity of regulatory requirements for 5G eSIM across regions, the system allows for flexible configurations in 5G-enabled devices, meeting region-specific regulatory requirements and providing highspeed connectivity worldwide.

Beyond smartphones, the dual eSIM design may be applied to IoT devices that require connectivity across regions with varying eSIM regulations for global IoT deployments in fields such as logistics, fleet management, and international shipping, providing seamless connectivity across borders.

Many modifications and other embodiments of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

It is to be understood that the above description is intended to be illustrative, and not restrictive. For example, the above-discussed embodiments may be used in combination with each other. Many other embodiments will be apparent to those of skill in the art upon reviewing the above description.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

The benefits and advantages which may be provided by the present disclosure have been described above with regard to specific embodiments. These benefits and advantages, and any elements or limitations that may cause them to occur or to become more pronounced are not to be construed as critical, required, or essential features of any or all of the embodiments.

While aspects of the present disclosure have been described with reference to particular embodiments, it should be understood that the embodiments are illustrative and that the scope of the disclosure is not limited to these embodiments. Many variations, modifications, additions, and improvements to the embodiments described above are possible. It is contemplated that these variations, modifications, additions, and improvements fall within the scope of the disclosure.

## Claims

1. A system (102) with a configurable Printed Circuit Board (PCB) (202) with a dual Embedded Subscriber Identity Module (eSIM) architecture, the system (102) comprising:
the PCB (202) comprising;
a first Embedded Universal Integrated Circuit Card (eUICC) (204) coupled with the PCB (202), wherein the first eUICC (204) is configured to operate in a first geographical location (106);
a second eUICC (206) coupled with the PCB (202), wherein the second eUICC (206) is configured to operate in a plurality of geographical locations (108); and
a processor coupled with the PCB (202), wherein the processor (208) is configured to manage operation of the first eUICC (204) and the second eUICC (206).

2. The system (102) according to claim 1, further comprising a control module (210) configured to operate the second eUICC (206) based on the plurality of geographical locations.

3. The system (102) according to claim 1, wherein the first eUICC (204) is configured to support a first Embedded Subscriber Identity Module (eSIM) (306) in the first geographical location (106).

4. The system (102) according to any one of the preceding claims, wherein the second eUICC (206) is configured to support a second Embedded Subscriber Identity Module (eSIM) (312) and an Embedded Secure Element (eSE) (310) configured to enable roaming in the plurality of geographical locations (108).

5. The system (102) according to any one of the preceding claims, wherein the second eUICC (206) is configured to support Near Field Communication Controller (NFCC) (314) operations.

6. The system (102) according to any one of the preceding claims, wherein the second eUICC (206) is configured to support the eSE (310) to enable wallet services in the plurality of geographical locations (108).

7. The system (102) according to any one of the preceding claims, wherein at least one regulation of the first geographical location (106) is incompatible with regulations of the plurality of geographic locations (108).

8. The system (102) according to any one of the preceding claims, wherein the first eUICC is physically segregated from the second eUICC.

9. A method (300) for configuring a Printed Circuit Board (PCB) (202) with dual Embedded Subscriber Identity Module (eSIM) architecture in a system (100), the method (300) comprising:
configuring a first Embedded Universal Circuit Card (eUICC) (204) to operate in a first geographical location (106);
configuring a second eUICC (206) to operate in a plurality of geographical locations (108); and
operating a processor to manage operations of the first eUICC (204) and the second eUICC (206).

10. The method (300) according to claim 9, wherein the second eUICC (206) is operated by a control module based on the plurality of geographical locations (108).

11. The method (300) according to any one of the claims 9 or 10, further comprising coupling the first eUICC (204) on the PCB (202), wherein the first eUICC (204) is configured to support a first Embedded Subscriber Identity Module (eSIM) (302) in the first geographical location (106).

12. The method (300) according to any one of the claims 9 to 11, further comprising coupling the second eUICC (206) on the PCB (202), wherein the second eUICC (206) is configured to support a second Embedded Subscriber Identity Module (eSIM) (304) and an Embedded Secure Element (eSE) (310) configured to enable roaming in the plurality of geographical locations (108).

13. The method (300) according to any one of the claims 9 to 12, wherein the second eUICC (206) is configured to support Near Field Communication Controller (NFCC) (310) operations.

14. The method (300) according to any one of the claims 9 to 13, wherein the second eUICC (206) is configured to support the eSE (310) to enable wallet services in the plurality of geographical locations (108).

15. The method (300) according to any one of the claims 9 to 14, wherein at least one regulation of the first geographical location (106) is incompatible with regulations of the plurality of geographic locations (108).
